Europäisches Patentamt

European Patent Office

Office européen des brevets

(11) Numéro de publication: **0 216 670**
**B1**

(12) **FASCICULE DE BREVET EUROPEEN**

(19)

(45) Date de publication du fascicule du brevet:
15.03.89

(21) Numéro de dépôt: **86401857.7**

(22) Date de dépôt: **21.08.86**

(51) Int. Cl.⁴: **B60R 22/06**, B65H 75/36

(54) **Dispositif de stockage pour ruban d'entraînement notamment de ceinture de sécurité passive de véhicule automobile.**

(30) Priorité: **27.08.85 FR 8512766**

(43) Date de publication de la demande:
**01.04.87 Bulletin 87/14**

(45) Mention de la délivrance du brevet:
**15.03.89 Bulletin 89/11**

(84) Etats contractants désignés:
**DE GB IT SE**

(56) Documents cités:
**EP-A- 0 088 702**
**GB-A- 2 087 219**
**US-A- 2 832 590**
**US-A- 4 316 619**
**US-A- 4 344 252**
**US-A- 4 433 509**
**US-A- 4 564 218**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Betencourt, Joseph Julien, Autechaux Roide, F-25150 Pont-de-Roide(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention est relative aux ceintures de sécurité passives pour véhicules automobiles, et se rapporte plus particulièrement au stockage du ruban d'entraînement de l'organe mobile auquel est fixée la sangle de la ceinture.

L'organe mobile est généralement déplaçable par un dispositif d'entraînement entre une position d'attente et une position d'assujettissement de l'utilisateur sur son siège.

Lorsque le ruban n'est pas continu et que l'organe mobile est déplacé en direction du dispositif d'entraînement, un brin libre du ruban d'entraînement dont la longueur peut dépasser un mètre, doit être logé dans un boîtier en vue de le protéger.

Pour des raisons d'encombrement, on ne peut envisager de loger ce brin dans un tube droit ou coudé.

Le document US-A 4 316 619 décrit un dispositif de stockage pour ruban d'entraînement de ceinture de sécurité, ledit ruban d'entraînement passant sur un organe d'entraînement actionné par un moteur électrique et ledit dispositif étant constitué par une cassette.

Par ailleurs, le document US-A 2 832 590 décrit un dispositif d'actionnement pour fenêtre à l'aide d'une chaîne flexible dans lequel afin de réduire l'encombrement du dispositif d'actionnement, il est prévu une cassette de stockage de la chaîne flexible, cassette dans laquelle est ménagé un couloir de guidage de la chaîne s'enroulant sur lui-même en partant de la périphérie de la cassette.

L'invention vise donc à créer un dispositif de stockage de ruban d'entraînement qui soit de construction simple, qui présente un encombrement réduit au minimum et qui ne nécessite de prévoir aucun logement spécial dans la carrosserie d'un véhicule destiné à le recevoir.

Elle a donc pour objet un dispositif de stockage pour ruban d'entraînement notamment de ceinture de sécurité passive de véhicule automobile, ledit ruban d'entraînement passant sur un organe d'entraînement actionné par un moteur électrique, ledit dispositif de stockage étant constitué par une cassette, caractérisé en ce que la cassette contient ledit organe d'entraînement du ruban et en ce que dans la cassette est ménagé un couloir de guidage du ruban s'enroulant sur lui-même en partant de la périphérie de la cassette, la cassette étant de forme générale prismatique et ledit couloir de guidage étant constitué de portions rectilignes reliées entre elles par des portions incurvées ayant toutes le même rayon de courbure quel que soit leur emplacement sur le parcours dudit ruban.

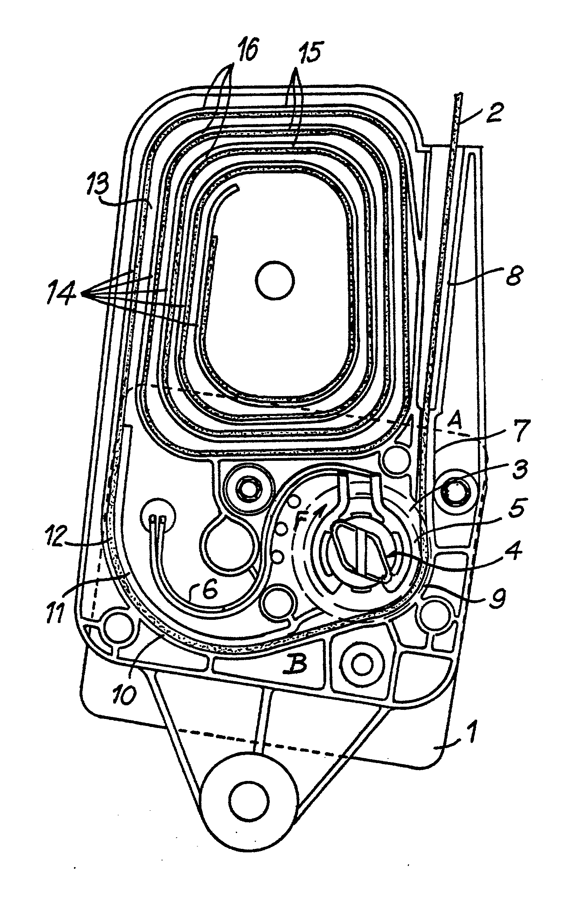

L'invention sera mieux comprise à l'aide de la description qui va suivre, donnée uniquement à titre d'exemple et faite en se référant au dessin annexé, sur lequel:

- la Fig. Unique est une vue de face couvercle enlevé d'un dispositif de stockage de ruban d'entraînement suivant l'invention.

Sur cette Fig., on a représenté un dispositif d'entraînement 1 d'une bande 2 destinée à entraîner un organe mobile non représenté auquel est accroché une extrémité d'une sangle de ceinture de sécurité passive non représentée.

Le ruban 2 passe sur une roue à picots 3 calée sur un moteur électrique 4 alimenté en courant électrique par l'intermédiaire de conducteurs 6.

La roue à picots 3 est montée à l'intérieur d'un boîtier 7 en forme de cassette, en matière plastique moulée qui, dans le présent exemple, est venu de matière avec le boîtier du dispositif d'entraînement 1. La cassette 7 est de forme générale prismatique. Elle comporte une portion d'entrée 8 de forme légèrement évasée prolongée par une paroi 9 incurvée, concentrique à la roue à picots 3 et délimitant avec celle-ci un passage pour le ruban 2. La paroi incurvée 9 est ensuite prolongée par une paroi 10 de rayons relativement important doublée à l'intérieur par une paroi 11 définissant avec la paroi 10 un canal 12 d'accès du ruban au dispositif de stockage proprement dit.

Celui-ci est formé par la continuation de la paroi 10 qui s'enroule sur elle-même à partir de la périphérie de la cassette jusqu'à une région centrale de celle-ci en définissant ainsi un couloir de guidage 13 du ruban 2. Dans sa partie définissant le dispositif de stockage, la paroi 10 est constituée de portions rectilignes 14, 15 parallèles entre elles, reliées par des portions 16 en arc de cercle ou d'ellipse ayant toutes le même rayon de courbure quel que soit leur emplacement sur le parcours.

La courbure des parties en arc de cercle 16 est choisie de manière à permettre d'introduire le ruban dans le dispositif de stockage d'une part sans que le ruban prenne une déformation permanente et d'autre part pour que l'effort pour courber le ruban dans les coudes et l'effort dû au frottement contre les parois du dispositif de stockage sous l'effet du redressement élastique du ruban n'atteigne pas des valeurs telles que le dispositif d'entraînement 1 manque de puissance ou que les ondulations par flambage du ruban entre les parois du dispositif de stockage l'empêchent de progresser.

Un bon compromis dimensionnel pour un ruban d'une épaisseur de 1,6 mm consiste à choisir un rayon pour les parties en arc de cercle qui ne soit pas inférieur à 14 mm. Cette condition peut se traduire par la relation:

$r$ min = $10e - 2$, $r$ étant le rayon de courbure et $e$ l'épaisseur du ruban, tous deux étant exprimés en mm.

Le couloir de guidage 13 défini par l'enroulement de la paroi 10 sur elle-même a une largeur qui laisse pour un ruban de 1,6 mm d'épaisseur un jeu assez prononcé, de l'ordre de 0,6 à 1 mm.

On peut adopter pour le calcul de ce jeu $j$ la relation:

$j = e/2 \pm 0,2$ dans laquelle $e$ est l'épaisseur du ruban, $j$ et $e$ étant donnés en mm.

Le fait que la cassette qui constitue le dispositif de stockage soit solidaire du dispositif d'entraînement permet d'utiliser au mieux le minimum d'espace disponible et d'éviter de pratiquer à demeure dans la carrosserie du véhicule des logements qui ne seraient pas utilisés lorsque le dispositif de déplacement de ruban n'est pas nécessaire sur le véhicule.

Le fonctionnement du dispositif qui vient d'être décrit est le suivant.

Lorsque la roue à picots 3 tourne dans le sens de la flèche F, le ruban 2 est déplacé de l'emplacement A vers l'emplacement B en s'introduisant par la forme d'entrée évasée 8 ménagée entre les parois 10 et 11 venues de matière avec le boîtier 7. Après le canal 12 de rayon assez grand, le ruban 2 pénètre dans le réceptacle proprement dit constitué par l'enroulement sur lui-même de la paroi 10 et se place contre cette paroi sous l'effet de sa tendance propre au redressement.

Lorsque la roue à picots tourne en sens inverse de la flèche F, elle provoque le retrait du ruban hors du dispositif de stockage par simple traction sur celui-ci.

Un couvercle non représenté peut être vissé ou embouti et soudé sur le boîtier 7 et protéger ainsi le ruban 2 contre des salissures et agressions éventuelles.

Le boîtier 7 et son couvercle peuvent avantageusement être réalisés en matière plastique moulée.

Dans l'exemple qui vient d'être décrit, l'invention est considérée comme étant appliquée à une ceinture de sécurité passive. On comprendra cependant que cette invention est également applicable aux lève-vitres et à tout autre organe pour véhicule automobile dans lequel un mouvement de translation est obtenu par déplacement d'un ruban perforé ou non, métallique ou en matière plastique entraîné par une roue à picots ou un dispositif à friction.

## Revendications

1. Dispositif de stockage pour ruban d'entraînement notamment de ceinture de sécurité passive de véhicule automobile, ledit ruban d'entraînement (2) passant sur un organe d'entraînement (3) actionné par un moteur électrique (4), ledit dispositif de stockage étant constitué par une cassette (7) caractérisé en ce que la cassette (7) contient ledit organe d'entraînement (3) du ruban et en ce que dans la cassette est ménagé un couloir (13) de guidage du ruban (2) s'enroulant sur lui-même en partant de la périphérie de la cassette (7), la cassette (7) étant de forme générale prismatique et ledit couloir de guidage (13) étant constitué de portions rectilignes (14, 15) reliées entre elles par des portions incurvées (16) ayant toutes le même rayon de courbure quel que soit leur emplacement sur le parcours dudit ruban (2).

2. Dispositif de stockage suivant la revendication 1, caractérisé en ce que les portions incurvées (16) sont des portions en arc de cercle ou elliptiques.

3. Dispositif de stockage suivant l'une des revendications 1 et 2, caractérisé en ce que la cassette (7) est venue de matière avec le boîtier du dispositif d'entraînement.

4. Dispositif de stockage suivant l'une des revendications 1 à 3, caractérisé en ce que ladite cassette (7) comporte en outre une portion d'entrée (8) de forme généralement évasée prolongée par une paroi incurvée (9) concentrique à l'organe d'entraînement (3) et délimitant avec celui-ci un passage pour le ruban (2), ladite paroi incurvée étant ensuite prolongée par une paroi (10) de rayon relativement important doublée à l'intérieur par une paroi (11) définissant avec la paroi (10) un canal (12) d'accès du ruban (2) au dispositif de stockage proprement dit.

5. Dispositif suivant la revendication 4, caractérisé en ce que ledit couloir de guidage (13) pour le ruban (2) est constitué par la continuation de la paroi (10) venue de matière avec la cassette (7) et s'enroulant sur elle-même à partir de la périphérie de la cassette (7) jusqu'à une région centrale de celle-ci.

6. Dispositif de stockage suivant l'une des revendications 1 à 5, caractérisé en ce que les parties curvilignes de la paroi du couloir de guidage (13) ont un rayon r lié à l'épaisseur e du ruban d'entraînement (2) par la relation:
r min = 10e − 2, r et e étant exprimés en mm.

7. Dispositif de stockage suivant l'une des revendications 1 à 6, caractérisé en ce que le couloir de guidage (13) du ruban d'entraînement (2) a une largeur qui laisse pour le ruban un jeu j lié à l'épaisseur e du ruban (2) par la relation:
j = e/2 ± 0,2, j et e étant exprimés en mm.

## Patentansprüche

1. Treibriemenspeichervorrichtung, insbesondere für einen passiven Sicherheitsgurt für Kraftfahrzeuge, wobei der Treibriemen (2) auf einem Treiborgan (3) vorbeiläuft, das von einem Elektromotor (4) angetrieben wird, wobei die Speichervorrichtung aus einer Kassette (7) gebildet ist, dadurch gekennzeichnet, daß die Kassette (7) das Treiborgan (3) des Riemens enthält, und daß in der Kassette ein Führungskanal (13) des Riemens (2) ausgebildet ist, der sich auf sich selbst ausgehend von dem Umfang der Kassette (7) aufwickelt, wobei die Kassette (7) von allgemein prismatischer Form ist, und der Führungskanal (13) aus geradlinigen Abschnitten (14, 15) gebildet ist, die untereinander durch bogenförmige Abschnitte (16) verbunden sind, die alle den gleichen Kurvenradius unabhängig von ihrer Anordnung auf dem Weg des Riemens (2) aufweisen.

2. Speichervorrichtung nach Anspruch 1, dadurch gekennzeichnet, daß die bogenförmigen Abschnitte (16) Kreisbogenabschnitte oder elliptische Bogenabschnitte sind.

3. Speichervorrichtung nach einem der Ansprüche 1 und 2, dadurch gekennzeichnet, daß die Kassette (7) einstückig mit dem Gehäuse der Treibvorrichtung ausgebildet ist.

4. Speichervorrichtung nach einem der Ansprüche 1 bis 3, dadurch gekennzeichnet, daß die Kassette (7) weiterhin einen Eingangsbereich (8) von allgemein konisch erweiterter Form aufweist, der durch eine gebogene Seitenwand (9) verlängert wird, die konzentrisch bezüglich des Treiborgans (3) verläuft und mit diesem einen Kanal für den Riemen (2) begrenzt, wobei die bogenförmige Seitenwand sodann durch eine Seitenwand (10) von relativ großem Durchmesser verlängert wird, die im Inneren durch eine Seitenwand (11) bedeckt ist, welche mit der Seitenwand (10) einen Zugangskanal (12) des Riemens (2) zur eigentlichen Speichervorrichtung bildet.

5. Vorrichtung nach Anspruch 4, dadurch gekennzeichnet, daß der Führungskanal (13) für den Riemen (2) durch die Verlängerung der Seitenwand (10) einstückig mit der Kassette (7) ausgebildet ist und sich um sich selbst, ausgehend vom Umfang der Kassette (7) bis zu ihrem Mittenbereich, einrollt.

6. Speichervorrichtung nach einem der Ansprüche 1 bis 5, dadurch gekennzeichnet, daß die gekrümmten Abschnitte der Seitenwand des Führungskanals (13) einen Durchmesser r aufweisen, der mit der Dicke e des Treibriemens (2) durch die Gleichung verbunden ist:
$r \min = 10e - 2$, wobei r und e in mm ausgedrückt sind.

7. Speichervorrichtung nach einem der Ansprüche 1 bis 6, dadurch gekennzeichnet, daß der Führungskanal (13) des Treibriemens (2) eine Breite aufweist, die für den Treibriemen ein Spiel j gebunden an die Dicke e des Riemens (2) durch folgende Gleichung aufweist:
$j = e/2 \pm 0{,}2$, wobei j und e in mm ausgedrückt sind.

## Claims

1. A storage device for a drive band, more particularly a passive safety belt for a motor vehicle, the drive band (2) passing over a drive member (3) actuated by an electric motor (4), the storage device being formed by a cassette (7), characterized in that the cassette (7) contains said drive member (3) for the band, and the cassette is formed with a guide passage (13) for guiding the band (2) rolling up on itself starting from the periphery of the cassette (7), the cassette (7) having a generally prismatic shape and the guide passage being formed by rectilinear portions (14, 15) interconnected by arched portions (16) all having the same radius of curvature, whatever their positioning over the travel of the band (2) may be.

2. A storage device according to claim 1, characterized in that the arched portions (16) are portions of the arc of a circle or elliptical portions.

3. A storage device according to one of claims 1 or 2, characterized in that the cassette (7) is made in one piece with the casing of the drive device.

4. A storage device according to any of claims 1 to 3, characterized in that the cassette (7) also comprises an intake portion (8) of generally widened shape which is extended by an arched wall (9) concentric with the drive member (3) and cooperating therewith to bound a passage for the band (2), the arched wall then being extended by a wall (10) of relatively large radius paralleled on the inside by a wall (11) cooperating with the wall (10) to bound an access channel (12) for the band (2) to the actual storage device.

5. A storage device according to claim 4, characterized in that the guide passage (13) for the band (2) is formed by the continuation of the wall (10) made in one piece with the cassette (7) and rolling up on itself from the periphery of the cassette (7) to a central region thereof.

6. A storage device according to any of claims 1 to 5, characterized in that the curvilinear parts of the wall of the guide passage (13) have a radius r related to the thickness e of the drive band (2) by the relationship:
$r \min = 10e - 2$, r and e being expressed in mm.

7. A storage device according to any of claims 1 to 6, characterized in that the guide passage (13) for the drive band (2) has a width which allows the band a clearance j related to the thickness e of the band (2) by the relationship:
$j = e/2 \pm 0.2$, j and e being expressed in mm.